Europäisches Patentamt

European Patent Office

Office européen des brevets

(19)

(11) Veröffentlichungsnummer : **0 090 906**
**B1**

(12) # EUROPÄISCHE PATENTSCHRIFT

(45) Veröffentlichungstag der Patentschrift :
**30.07.86**

(51) Int. Cl.⁴ : **A 01 F 25/20**

(21) Anmeldenummer : **82810147.7**

(22) Anmeldetag : **01.04.82**

(54) Schneidorgan zum Schneiden von Silagegut.

(43) Veröffentlichungstag der Anmeldung :
**12.10.83 Patentblatt 83/41**

(45) Bekanntmachung des Hinweises auf die Patenterteilung : **30.07.86 Patentblatt 86/31**

(84) Benannte Vertragsstaaten :
**AT BE CH DE FR GB IT LI LU NL SE**

(56) Entgegenhaltungen :
**DE-A- 2 142 163**
**DE-A- 2 824 964**
**DE-A- 2 918 650**
**DE-B- 2 810 366**
**DE-C- 2 138 186**
**NL-A- 7 208 979**

(73) Patentinhaber : **Trioliet Mullos B.V.**
**Smitsbreeweg 2**
**NL-7581 HE Losser (NL)**

(72) Erfinder : **Der Erfinder hat auf seine Nennung verzich-**
**tet**

(74) Vertreter : **de Vries, Johannes Hendrik Fokke et al**
**Octrooibureau Los en Stigter B.V. P.O. Box 20052**
**NL-1000 HB Amsterdam (NL)**

**Beschreibung**

Die Erfindung bezieht sich auf ein Schneidorgan zum Schneiden von Silagegut, mit einem durch ein Antriebsorgan abwärts und aufwärts bewegbaren Blatt, dessen Unterrand gezackt ausgebildet ist.

In bekannten Ausführungen eines derartigen Schneidorganes, sehe zum Beispiel NL-A-72.08979, ergibt sich das Problem, dass die zickzackförmigen Zacken am Unterrand des Blattes bei der kontinuierlichen Abwärtsbewegung dieses Blattes das Silagegut gleichsam in den Hohlräumen zwischen auffolgenden Zacken verdichten. Dadurch erfordert das tiefer Verdringen in das Silagegut immer grössere Kräfte.

Die vorliegende Erfindung hat den Zweck, ein Schneidorgan zum Schneiden von Silagegut zu schaffen, wobei dieser Nachteil in zweckmässiger Weise beseitigt ist.

Zu diesem Zweck ist das Schneidorgan nach der Erfindung dadurch gekennzeichnet, dass ein zweites Blatt vorgesehen ist, das gleichfalls einen gezackten Unterrand aufweist, wobei die beiden Blätter hintereinander angeordnet sind und die Zacken dieser Blätter relativ zueinander versetzt sind, die beiden Blätter abwärts und aufwärts zueinander bewegbar sind und die beiden Blätter durch das Antriebsorgan abwechselnd schrittweise abwärts durch das Silagegut hinbewegbar sind.

Nach der Erfindung sorgen die direkt hinter einander liegenden, versetzten Zacken dafür, dass das Silagegut, das bei einem Bewegungsschritt des einen Blattes zwischen auffolgenden Zacken dieses Blattes verdichtet ist, bei einem darauffolgenden Bewegungsschritt des anderen Blattes durch die Zacken dieses anderen Blattes wieder auseinander gedrückt wird. Durch das seitliche Wegdrücken des Silagegutes durch die Zacken des bewegenden Blattes wird das Silagegut zwangsmässig an die Seitenkanten aller Zacken angedrückt und diesen entlang bewegt, wodurch eine hervorragende Schneidwirkung erzielt wird. In dieser Weise wir eine Kompressionswirkung in dem Silagegut, welche einen erhöhten Widerstand gegen Durchschneiden herbeiführen würde, in zweckmässiger Weise verhindert.

DE-A-2 918 650 zeigt ein Schneidorgan zum Schneiden von Silagegut mit zwei durch ein Antriebsorgan abwärts und aufwärts bewegbaren Blättern, deren Unterrändern gezackt ausgebildet sind, welche Blätter sich hintereinander erstrecken. Die Blätter sind weiterhin hin und her bewegbar, sodass die Zacken dieser Blätter während bestimmter Zeite relativ zueinander versetzt sind. Durch diese relative Hin-und Herbewegung der Blätter wird die Schneidwirkung erreicht. Für diese Hin- und Herbewegung sind weitere Antriebsmassnahmen notwendig, was eine konstruktive Aufwand zu Folge hat.

Weiterhin können nach der Erfindung die Blätter durch das Antriebsorgan zusammen unterbrochen aufwärts, bzw. abwärts bis zum Silagegut bewegbar sein.

Nach der Erfindung kann weiterhin ein Leitorgan die beiden Blätter aufeinander halten.

Dabei kann eines der beiden Blätter einen Vorsprung aufweisen, der formschlüssig mit einem Schlitz im anderen Blatt in Eingriff ist und in diesem abwärts und aufwärts bewegbar ist.

Bei einem Schneidorgan ; bei welchem die Unterseite der Zacken des erstgenannten Blattes schräg abwärts zu einer der Hauptflächen dieses Blattes verläuft, ist es, zwecks Erleichterung des Durchschneidens des Silagegutes, vorteilhaft, wenn die Unterseite der Zacken des anderen Blattes gleichfalls schräg abwärts zu einer der Hauptflächen dieses anderen Blattes verläuft und die genannten Hauptflächen der beiden Blätter sich aufeinander abstützen.

Da der auf das Schneidorgan nach der Erfindung durch das Silagegut ausgeübte Widerstand erheblich verringert ist, wird eine Ausführung möglich, in welcher die Blätter sich über eine derartige Breite erstrecken, dass sie eine der Seiten eines Silageblockes ohne seitliche Bewegung ausschneiden können. In dieser Weise wird selbstverständlich eine wichtige Zeitersparnis erreicht.

Eine noch grössere Zeitersparnis wird möglich, wenn die Blätter L-förmig sind und derart bemessen sind, dass sie zwei Seiten eines Silageblockes ausschneiden können.

Um ein äusserstschnelles Ausschneiden des Silagegutblockes zu ermöglichen, kann nach der Erfindung eine Ausführung angewandt werden, welche dadurch gekennzeichnet ist, dass die beiden Blätter U-förmig sind und derart bemessen sind, dass sie drei Seiten eines Silageblockes ausschneiden können.

Die Erfindung wird nachstehend erläutert an Hand der Zeichnung, die in schematischer Weise einige Ausführungsbeispiele des Schneidorganes nach der Erfindung darstellt.

Figur 1 ist eine Vorderansicht einer ersten Ausführung der beiden Blätter des Schneidorganes nach der Erfindung.

Figur 2 ist eine Oberansicht der beiden Blätter nach Fig. 1.

Figur 3 ist eine Vorderansicht einer anderen Ausführung der beiden Blätter des Schneidorganes nach der Erfindung.

Figur 4 ist eine Seitenansicht der beiden Blätter nach Fig. 3.

Figur 5 ist eine schematische perspektivische Ansicht eines Siloblockschneiders, der mit einem Schneidorgan nach der Erfindung ausgeführt ist.

Figur 6 ist eine Vorderanwicht des Schneidorgans des Siloblockschneiders nach Fig. 5.

Figuren 7-9 geben schematisch verschiedene Positionen wieder der Elemente eines Hydrauliksystems zur Betätigung des Schneidorganes nach Fig. 6.

Figur 10 ist eine schematische Seitenansicht eines Silagegutschneid- und Abfuhrorgans, der mit einem Schneidorgan nach der Erfindung ausgeführt ist.

Figur 11 ist eine perspektivische Ansicht von zwei U-förmigen Blättern mit ihrer Führung.

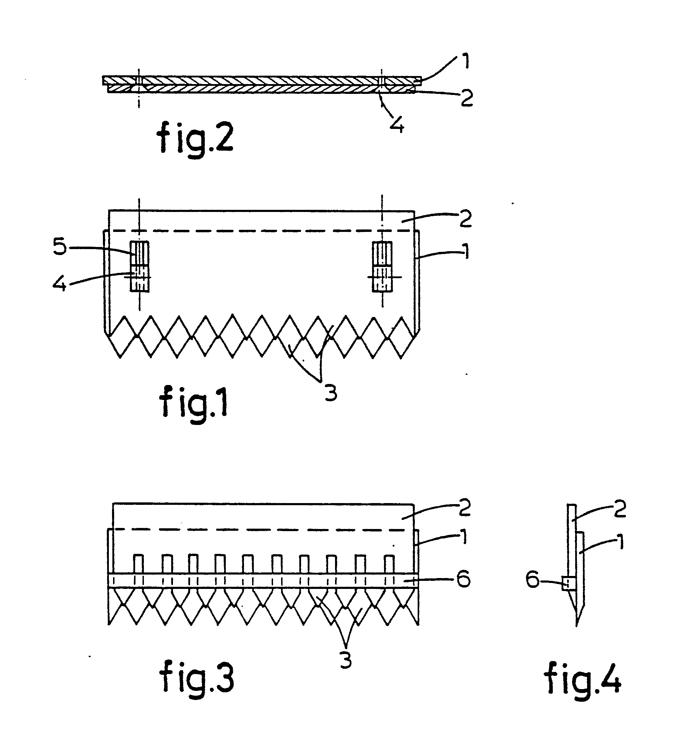

In den Fig. 1 und 2 ist ein Teil eines Schneidorganes nach der Erfindung zum Schneiden von Silagegut dargestellt. Dieses Schneidorgan enthält zwei, durch ein nicht in den Fig. 1, 2 dargestelltes Antriebsorgan in noch näher zu beschreibender Weise betätigbare Blätter 1 und 2, deren Unterränder gezackt ausgeführt sind.

Die beiden Blätter 1, 2 erstrecken sich hintereinander und stützen sich aneinander ab, während die Zacken 3 dieser Blätter 1, 2, vorzugsweise über eine halbe Teilung, relativ zueinander versetzt angeordnet sind.

Das hintere Blatt 1 weist einen schwalbenschwanzförmigen Vorsprung 4 auf, der formschlüssig mit einem Schlitz 5 im vorderen Blatt 2 in Eingriff ist und in diesen abwärts und aufwärts bewegt werden kann.

In den Fig. 3 und 4 ist eine etwas geänderte Ausführung der beiden Blätter 1 und 2 dargestellt, da dabei ein U-förmiges Leitorgan 6 mit dem hinteren Blatt 1 verbunden ist und das vordere Blatt 2 umgreift, um die beiden Blätter 1, 2 aufeinander zu halten. Das Leitorgan 6 ist zwischen auffolgenden Zacken des Blattes 2 mit dem Blatt 1 verbunden, um dem Leitorgan 6 ausreichende Steifigkeit zu erteilen.

Aus Fig. 4 geht hervor, dass die Unterseite der Zacken 3 der beiden Blätter 1, 2 schräg abwärts zu einer Hauptfläche des betreffenden Blattes 1 bzw. 2 verläuft, wobei diese Hauptflächen der beiden Blätter 1, 2 sich aneinander abstützen.

Vorzugsweise erstrecken die Blätter 1, 2 sich über eine derartige Breite, dass sie eine der Seiten eines Silagegutblockes ohne seitliche Bewegung ausschneiden können.

Noch schneller kann gearbeitet werden, wenn die Blätter 1, 2 L-förmig sind und derart bemessen sind, dass sie zwei Seiten eines Silagegutblockes gleichzeitig ausschneiden können.

Eine, was die Schneidezeit betrifft, optimale Wirkung wird erreicht, wenn die beiden Blätter 1, 2 U-förmig sind und derart bemessen sind, dass sie drei Seiten eines Silagegutblockes gleichzeitig ausschneiden können.

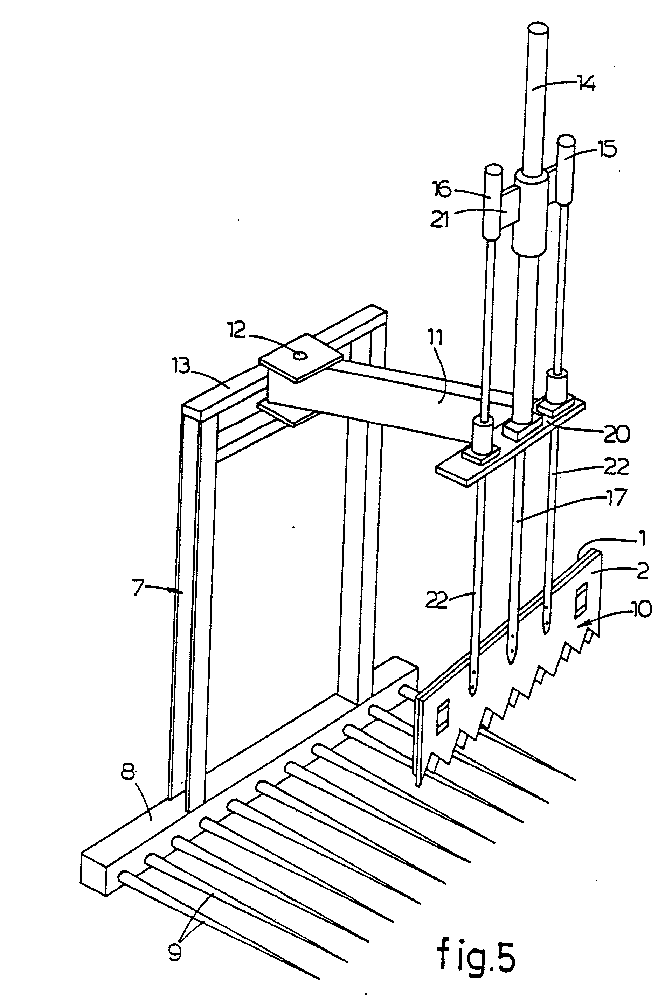

In Fig. 5 ist ein Ausführungsbeispiel eines Siloblockschneiders dargestellt, der mit einem Schneidorgan nach der Erfindung ausgeführt ist.

Dieser Siloblockschneider besitzt einen aufstehenden Rahmen 7, der auf der Unterseite einen Querbalken 8 umfasst, der mit einer Anzahl von etwa horizontal verlaufenden parallelen Tragzinken 9 ausgeführt ist.

Das Schneidorgan 10 wird schwenkbar durch einen Tragarm 11 unterstützt, der bei 12 gelenkig durch den Träger 13 am aufstehenden Rahmen 7 unterstützt ist.

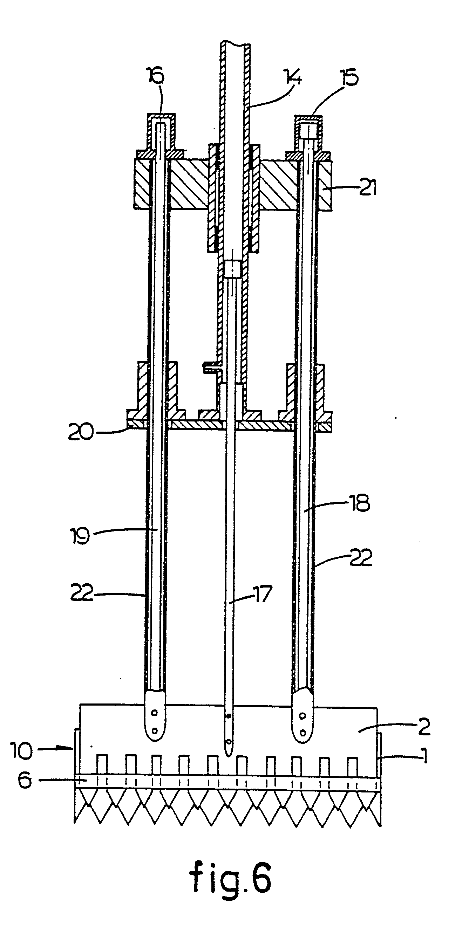

Wie aus den Fig. 5 und 6 hervorgeht, sind die Blätter 1, 2 antreibbar mittels eines Antriebsorganes, das im dargestellten Ausführungsbeispiel drei Hydraulikzylinder 14, 15, 16 umfasst, und zwar einen mittleren Zylinder 14 mit einer grossen Höhe und zwei erheblich kürzere äussere Zylinder 15, 16.

Die Kolbenstange 17 des mittleren Zylinders 14 greift an das vordere Blatt 2 an, während die Kolbenstange 18 des Zylinders 15 und die Plungerstange 19 des Zylinders 16 an das hintere Blatt 1 angreifen.

Die äusseren Zylinder 15, 16 sind aufwärts und abwärts bewegbar und sind fest verbunden mit dem Blatt 2, während der mittlere Zylinder 14 an einem, nicht in Höhenrichtung verstellbaren Rahmenteil 20 befestigt ist, der in der Ausbildung nach Fig. 5 mit dem Tragarm 11 schwenkbar verbunden ist.

Als (nicht in der Zeichnung dargestellte) Alternative kann der mittlere Zylinder 14 aufwärts- und abwärts- bewegbar sein, in welchem Fall die äusseren Zylinder 15, 16 am nicht in Höhenrichtung verstellbaren Rahmenteil 20 befestigt werden und mit einer viel grösseren Höhe als der mittlere Zylinder 14 ausgeführt werden.

Eine Leithülse, welche über den mittleren Zylinder 14 aufwärts und abwärts schiebbar geleitet ist, trägt ein Joch 21, auf welchem die äusseren Zylinder 15, 16 befestigt sind.

Um die äussere Kolbenstange 18 bzw. Plungerstange 19 verlaufen Leitbüchsen 22, die an ihrem oberen Ende mit dem Joch 21 verbunden sind und mit ihrem unteren Ende an das vordere Blatt 2 angreifen und deshalb die Verbindung zwischen den äusseren Zylindern 15, 16 und dem Blatt 2 zustande bringen.

Die beiden Leitbüchsen 22 werden geleitet durch am Rahmenteil 20 angeordnete Führungen.

Die beiden Blätter 1, 2 werden derart gesteuert, dass sie einerseits, zum Ausüben ihrer Schneidwirkung, abwechselnd schrittweise abwärts durch das Silagegut bewegt werden können, während sie weiterhin, zwecks Zeitersparnis, zusammen ununterbrochen abwärts bis zum Silagegut bewegt werden können und gleichfalls zusammen ununterbrochen aufwärtsbewegbar sind, um die Blätter 1, 2 nach der Schneidwirkung wieder in ihre obere Ausgangslage zurückzubringen.

Als Alternative ist es selbstverständlich auch möglich, diese beiden letzten Bewegungen, oder eine derselben ; schrittweise auszuführen.

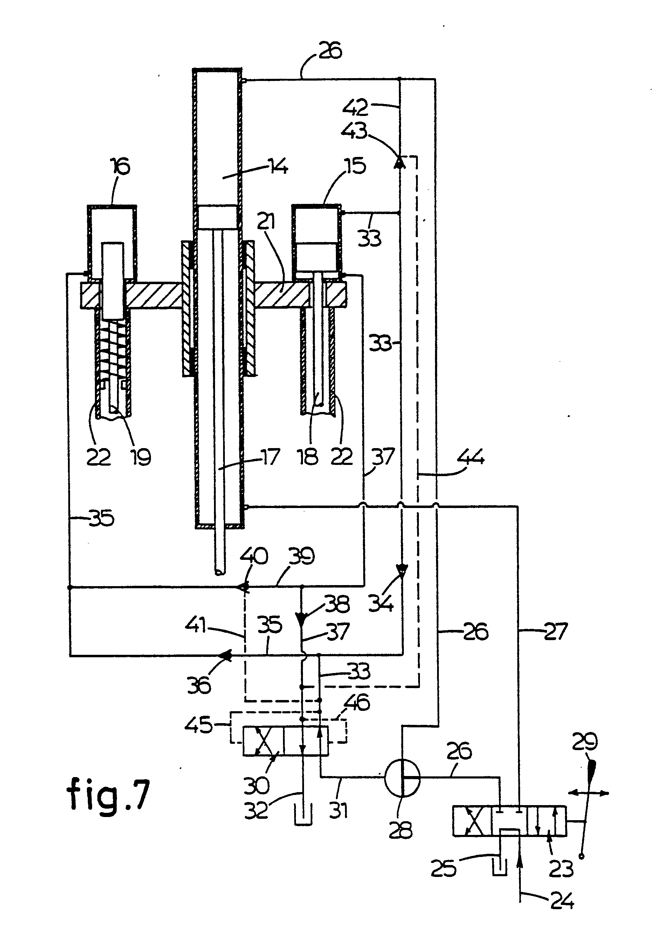

In den Fig. 7-9 ist in schematischer Weise ein Hydrauliksystem dargestellt, mit welchem die oben in erster Linie genannten Bewegungen der Blätter 1, 2 realisiert werden können.

Dieser Hydrauliksystem enthält einen Umkehrschieber 23 mit einer neutralen Zwischenlage. Dieser Umkehrschieber 23 ist an eine Zufuhr 24 und eine Abfuhr 25 eines hydraulischen Druckmediums angeschlossen.

Weiterhin ist der Umkehrschieber 23 über eine Leitung 26, in welcher ein Dreiwegventil 28 angeordnet ist, angeschlossen an den Raum oberhalb des Kolbens im mittleren Zylinder 14 mit grosser Höhe und über eine Leitung 27 an den Raum unterhalb des Kolbens im mittleren Zylinder 14.

Der Umkehrschieber 23 ist mit Hilfe eines Handgriffes 29 in drei Lagen stellbar, nämlich
in die mittlere Ruhelage;
in die rechte Arbeitslage, in welcher, wenn das Dreiwegventil 28 die in Fig. 7 dargestellte Lage einnimmt, das Druckmedium über die Leitung 26 in den Raum oberhalb des Kolbens im Zylinder 14 fliesst und den Kolben in diesem abwärts bewegt, während über die Leitung 27 das aus dem Raum unterhalb des Kolbens im mittleren Zylinder 14 gedrückte Druckmedium zur Abfuhr 25 zugeführt wird;
und weiterhin in die linke Arbeitslage, in welcher das Druckmedium aus der Zufuhr 24 über die Leitung 27 zum Raum unterhalb des Kolbens im Zylinder 14 zugeführt wird und der Kolben dieses Zylinders 14 aufwärts bewegt wird, wobei das aus dem Raum oberhalb des Kolbens im Zylinder 14 gedrückte Druckmedium über die Leitung 26 die Abfuhr 25 erreicht.

Diese beiden Arbeitslagen des Umkehrschiebers 23, in Kombination mit der in Fig. 7 dargestellten Lage des Dreiwegventiles 28, dienen um die beiden Blätter 1, 2 ununterbrochen abwärts bis zum Silagegut zu bewegen, bzw. um die beiden Blätter 1, 2 ununterbrochen zu heben, nachdem diese ihre Schneidwirkung beendet haben. Das Blatt 2 folgt nämlich der Bewegung der Kolbenstange 17, während über die an das Blatt 2 angreifenden Leithülsen 22 die Zylinder 15, 16 und deshalb die Kolbenstange 18 und die Plungerstange 19 bewegt werden, welche das Blatt 1 mitnehmen.

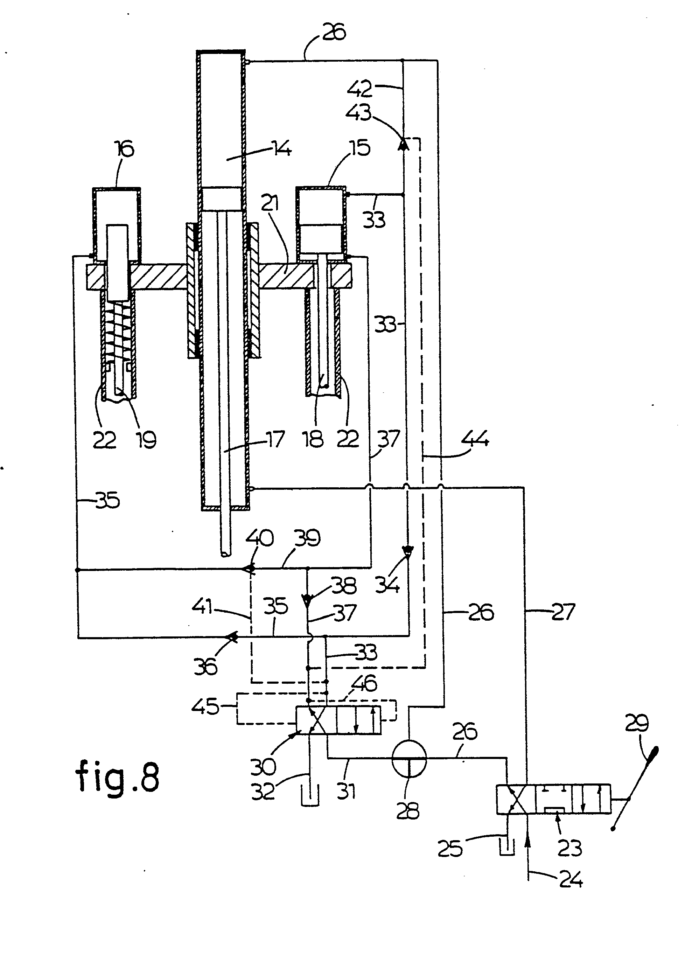

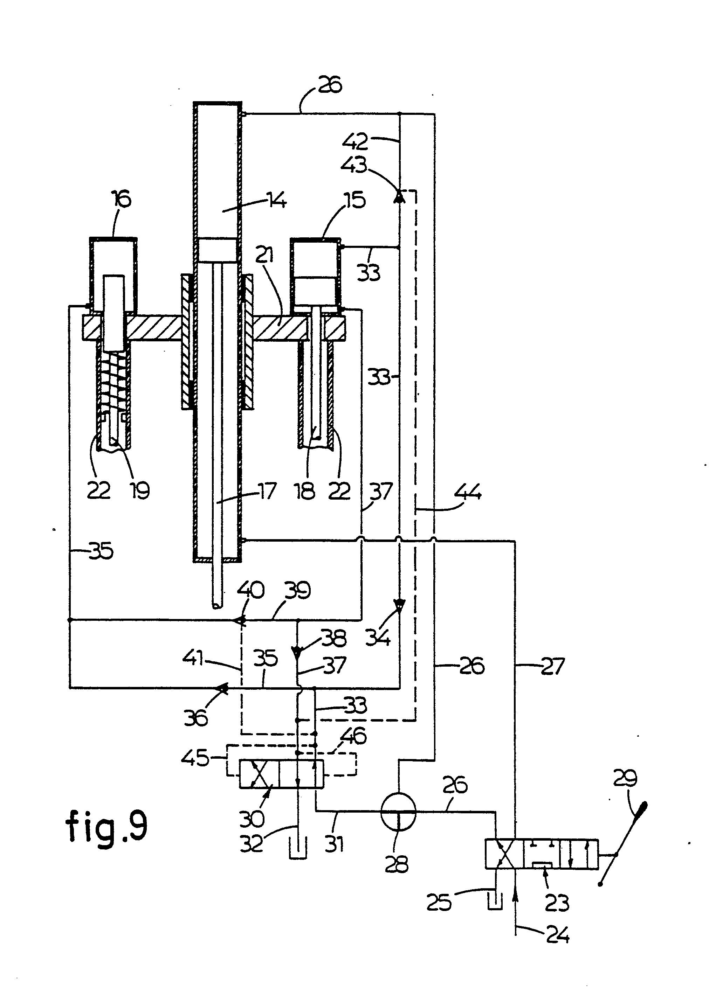

Wenn der Umkehrschieber 23 in seiner rechten Endlage bewegt ist, so dass das Druckmedium zur Leitung 26 geführt wird, und das Dreiwegventil 28 in die in Fig. 8 und 9 dargestellte Lage verstellt ist, werden die Blätter 1, 2 abwechselnd schrittweise abwärts durch das Silagegut bewegt.

Dazu verbindet das Dreiwegventil 28 die Leitung 26 mit einer Leitung 31, in welcher ein Umkehrschieber 30 angeordnet ist, der automatisch durch das Druckmedium umschaltbar ist und einerseits nicht nur mit der Leitung 31, aber auch mit einer Abfuhr 32 für das Druckmedium verbunden ist, während dieser Umkehrschieber 30 andererseits über eine Leitung 33, in welcher ein Rückschlagventil 34 angeordnet ist, mit der Oberseite des Zylinders 15 in Verbindung steht, wobei diese Leitung 33 eine Zweigleitung 35 aufweist, die zum Zylinder 16 führt und mit einem Rückschlagventil 36 ausgeführt ist, während an den Umkehrschieber 30 noch eine Leitung 37 angeschlossen ist, die zum Raum unterhalb des Kolbens im Zylinder 15 führt und in welcher ein Rückschlagventil 38 angeordnet ist, wobei an diese Leitung 37 eine Zweigleitung 39 angeschlossen ist, die über den letzten Teil der Leitung 35 zum Zylinder 16 führt und in welcher ein gesteuertes Rückschlagventil 40 angeordnet ist, das öffnet, wenn die Leitung 33 mit der Zufuhr 24 für das Druckmedium in Verbindung steht und über die Steuerleitung 41 der Mediumdruck dem gesteuerten Rückschlagventil 40 mitgeteilt wird.

Weiterhin ist an die Leitung 33 nich eine Zweigleitung 42 angeschlossen, die, über den letzten Teil der Leitung 26, zum Raum im Zylinder 14 oberhalb dessen Kolbens führt und in welcher ein gesteuertes Rückschlagventil 43 angeordnet ist. Dieses gesteuerte Rückschlagventil 43 wird geöffnet, wenn die Leitung 37 mit der Zufuhr 24 für das Druckmedium verbunden ist und der Mediumdruck über die Steuerleitung 44 dem gesteuerten Rückschlagventil 43 mitgeteilt wird.

Weiterhin sind an die Leitungen 33 und 37 Umschaltleitungen 45 und 46 angeschlossen, die mit dem Umkehrschieber 30 verbunden sind und diesen umschalten, wenn der Druck des Druckmediums in der Leitung 33 oder in der Leitung 37 einen bestimmten Wert erreicht hat.

Wenn der Umkehrschieber 30 in seiner meist rechten Lage steht (Fig. 8), wird das Druckmedium durch die Leitung 37 fliessen und den Raum im Zylinder 15 unterhalb dessen Kolbens erreichen. Hierdurch wird der Zylinder 15 abwärts bewegt und das Druckmedium wird aus dem Raum im Zylinder 15 oberhalb dessen Kolbens über das geöffnete gesteuerte Rückschlagventil 43 durch die Zweigleitung 42 und den letzten Teil der Leitung 26 in den Raum oberhalb des Kolbens im Zylinder 14 fliessen, wodurch die Kolbenstange des Zylinders 14 einen Schritt abwärts bewegt wird. Dabei wird das Blatt 2 über diesen Schritt abwärts bewegt, ebenso wie die Leitungsbüchsen 22, das Joch 21 und die Zylinder 15, 16.

Die Hublänge, welche durch den Kolben im Zylinder 14 ausgeführt wird, entspricht der Hublänge des Kolbens im Zylinder 15, wenn wenigstens die Fläche dieses letzten Kolbens gleich gross ist wie die Fläche des Kolbens im Zylinder 14.

Da die Stangen 18 und 19 an ihrer Stelle bleiben, wird das Blatt 1 während dieses Schrittes stillstehen.

Während der abwärtsen Bewegung des Zylinders 16 wird das Druckmedium über die Leitung 35, das Rückschlagventil 36 und die Leitung 33 die Abfuhr 32 erreichen.

Wenn der Kolben im Zylinder 14 und der Zylinder 15 am Ende des Schrittes zum Stillstand gekommen sind, wird der Druck in der Leitung 37 über die Umschaltleitung 46 eine Umschaltung des Umkehrschiebers 30 zur Folge haben (Fig. 9). Hierdurch wird die Leitung 33 mit der Zufuhr 24 für das Druckmedium verbunden, während die Leitung 37 an die Abfuhr 32 für das Druckmedium angeschlossen wird.

Das Druckmedium fliesst über die Leitung 33 zum Raum oberhalb des Kolbens im Zylinder 15, wodurch dieser Kolben abwärts bewegt wird. Das Druckmedium kann nicht zum mittleren Zylinder 14 fliessen, da das gesteuerte Rückschlagventil 43 geschlossen bleibt.

Das aus dem Raum unterhalb des Kolbens im Zylinder 15 verdrängte Druckmedium fliesst über die Leitung 37, die Zweigleitung 39 und das in der geöffneten Lage befindliche Rückschlagventil 40 über den letzten Teil der Leitung 35 zum Zylinder 16.

Der Kopf der Plungerstange 19 im Zylinder 16 ist derart bemessen relativ zum Kolben im Zylinder 15, dass die Stangen 18, 19 mit genau derselben Geschwindigkeit abwärts bewegt werden, wodurch das Blatt 1 einen abwärtsen Schritt ausführt.

Da die Kolbenstange 17 des Zylinders 14 in Ruhe bleibt, wird das Blatt 2 deshalb während des abwärtsen Schrittes des Blattes 1 stationär gehalten.

Nachdem die Kolbenstange 18 und die Plungerstange 19 in den Zylindern 15, 16 ihre untere Lage erreicht haben und deshalb zum Stillstand gekommen sind, wird der Druck in der Leitung 37 zunehmen und wird der Umkehrschieber 30 über die Umschaltleitung 45 wieder umgeschaltet.

Daraufhin führt die Kolbenstange 17 des mittleren Zylinders 14 wieder in der im vorstehenden beschriebenen Weise einen abwärtsen Schritt aus, welchem das Blatt 2 folgt, während das Blatt 1 in Ruhe bleibt.

Während im vorstehenden eine wenigstens ungefähr vertikale abwärtse Bewegung der Blätter 1, 2 beschrieben wurde, wird es deutlich sein, dass diese Blätter 1, 2 auch in einer schrägen Richtung abwärts und aufwärts bewegt werden können.

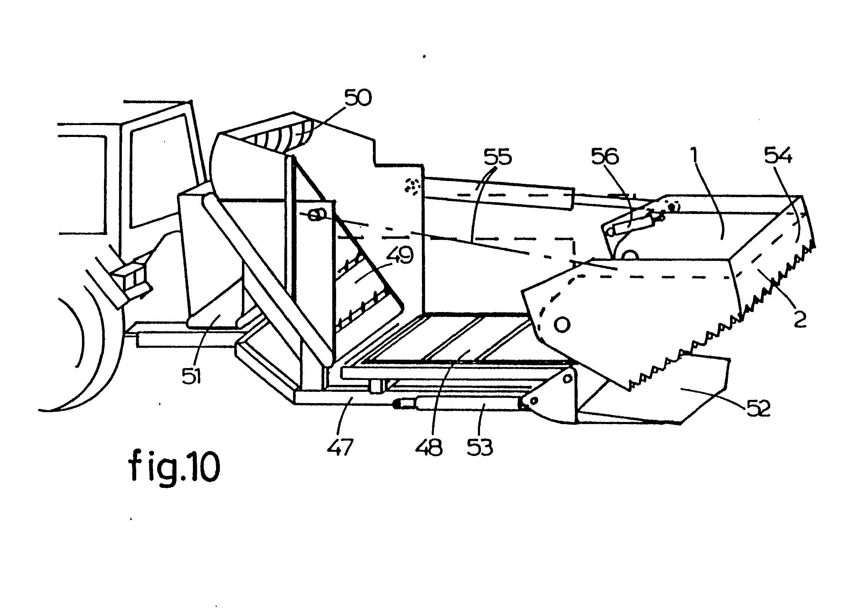

Weiterhin können die Blätter 1, 2 auch eine Schwenkbewegung ausführen, wie näher in der Fig. 10 erläutert ist.

In Fig. 10 ist ein Ausführungsbeispiel eines Silagegutschneid- und Abfuhrwagens in sehr schematischer Weise dargestellt. Dieser Wagen umfasst ein Gestell 47, das hinter einem Schlepper gekuppelt werden kann und mit Rädern (nicht dargestellt) über den Boden verfahrbar ist.

Der Silagegutschneid- und Abfuhrwagen ist ausgeführt mit einem unteren, etwa horizontalen Zufuhrförderer 48, einem schräg aufwärts verlaufenden Hebeförderer 49, der das Silagegut vom Zufuhrförderer 48 übernimmt und mit einem Rückfuhr- und Dosierorgan 50 zusammenarbeitet, und einem Querförderer 51, auf welchen das locker gemachte Silagegut vom Hebeförderer 49 in dosierten Mengen geschüttet wird.

Am Silagegutschneid- und Abfuhrwagen ist eine Klappe 52 befestigt, die mit Hilfe von hydraulisch betätigbaren Verstellorganen 53 aus einer horizontalen unteren Lage aufwärts und wieder zurück schwenkbar ist.

Weiterhin ist der Silagegutschneid- und Abfuhrwagen ausgeführt mit einem schwenkbar unterstützten Schneidorgan 54 nach der Erfindung, wobei die beiden Blätter 1, 2 U-förmig sind und derart bemessen, dass sie drei Seiten eines Silagegutblockes ausschneiden können. Der mittlere Teil der U-förmigen Blätter 1, 2 ist gekrümmt nach dem Radius der Schwenkbewegung.

Das Betätigungsorgan der beiden Blätter 1, 2 besteht in dem in Fig. 10 dargestellten Ausführungsbeispiel aus den langen Zylindern 55, die gelenkig an das Blatt 1 und an den Wagen angreifen, und aus den kurzen Zylindern 56, die gelenkig an die Blätter 1 und 2 angreifen.

Nachdem die Klappe 52 unter das Silagegut gefahren ist, werden die Blätter 1, 2 abwechselnd schrittweise abwärts durch das Silagegut bewegt. Daraufhin werden die Blätter 1, 2 wieder zurückgeschwenkt, während der ausgeschnittene Silagegutblock durch Verschwenkung der Klappe 52 auf den Zufuhrförderer 48 abgesetzt wird.

Selbstverständlich kann der Silagegutschneid- und Abfuhrwagen, statt mit einer Klappe 52, mit einem Querbalken mit Tragzinken ausgeführt sein, welcher schwenkbar mit dem Wagen verbunden ist.

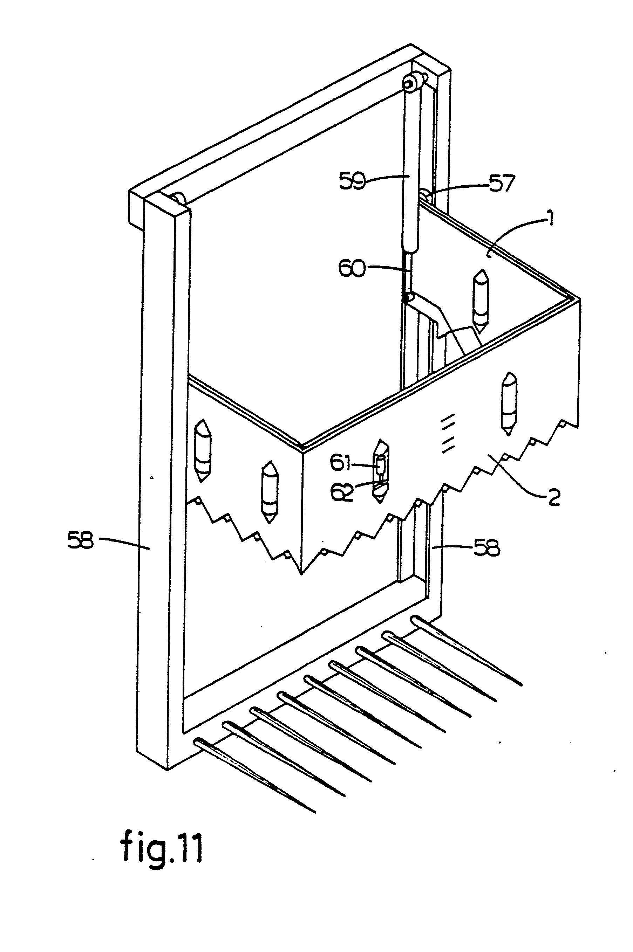

In fig. 11 ist ein Teil einer Silagegutschneiders dargestellt, der mit U-förmigen Blättern 1, 2 ausgeführt ist, welche Blätter 1, 2 wenigstens ungefähr vertikal abwärts und aufwärts bewegbar sind.

Am äusseren Blatt 2 sind beidseitig Laufrollen 57 befestigt, die in den Führungen 58 bewegbar sind. Mit den Führungen 58 sind hydraulisch betätigte Zylinder 59 verbunden, welche eine grosse Länge aufweisen und deren Stangen 60 an eines der Blätter 1, 2 angreifen. Weiterhin ist eines der Blätter 1 oder 2 verbunden mit einer Anzahl von kurzen Zylindern 61, deren Stangen 62 an das zweite Blatt 2 oder 1 angreifen. Durch diese langen und kurzen Zylinder 59, 61 können die Blätter 1, 2 einerseits abwechselnd schrittweise durch das Silagegut bewegt werden und andererseits kontinuierlich abwärts bis zum Silagegut bewegt werden, bzw., nach Beendigung der Schneidwirkung, wieder kontinuierlich aufwärts zur Beginnlage zurückgebracht werden.

Selbstverständlich ist es ebenso möglich, einen Silagegutschneider mit U-förmigen Blättern 1, 2 auszuführen, welche schwenkbar durch den Silagegutschneider unterstützt werden und, beispielsweise in der in Fig. 10 dargestellten Weise, bewegbar sind. Dabei ist wieder der mittlere Teil der Blätter 1, 2 gekrümmt nach dem Radius der Schwenkbewegung.

Obwohl in den Fig. 5-9 immer drei Zylinder 14-16 dargestellt sind, wird es deutlich sein, dass, besonders wenn die Blätter 1, 2 U-förmig ausgeführt sind, im allgemeinen mit einer grösseren Anzahl von Zylindern gearbeitet wird. Dabei haben mehrer von diesen Zylindern eine grössere Länge und erhalten im Betrieb keine Längsbewegung, während die anderen Zylinder kurz sind und die Länge der Schritte der schrittweisen Bewegung bestimmen, wobei diese letzten Zylinder im Betrieb der Bewegung eines der Blätter 1, 2 folgen.

Selbstverständlich kann die Befestigung eines Zylinders mit seiner zusammenarbeitenden Kolben- oder Plungerstange immer relativ zur im vorstehenden beschriebenen Befestigung umgekehrt werden.

**Patentansprüche**

1. Schneidorgan (10) zum Schneiden von Silagegut, mit einem durch ein Antriebsorgan (14-19) abwärts und aufwärts bewegbaren Blatt (1), dessen Unterrand gezackt ausgebildet ist, dadurch gekennzeichnet, dass ein zweites Blatt (2) vorgesehen ist, das gleichfalls einen gezackten Unterrand aufweist, wobei die beiden Blätter (1, 2) hintereinander angeordnet sind und die Zacken (3) dieser Blätter (1, 2) relativ zueinander versetzt sind, die beiden Blätter abwärts und aufwärts zueinander bewegbar sind und die beiden Blätter (1, 2) durch das Antriebsorgan (14-19) abwechselnd schrittweise abwärts durch das Silagegut hinbewegbar sind.

2. Schneidorgan nach Anspruch 1, dadurch gekennzeichnet, dass die Blätter (1, 2) durch das Antriebsorgan (14-19) zusammen ununterbrochen aufwärts bewegbar sind.

3. Schneidorgan nach Anspruch 1 oder 2, dadurch gekennzeichnet, dass die Blätter (1, 2) durch das Antriebsorgan (14-19) zusammen ununterbrochen abwärts bis zum Silagegut bewegbar sind.

4. Schneidorgan nach einem der vorhergehenden Ansprüche, dadurch gekennzeichnet, dass ein Leitorgan (6) die beiden Blätter (1, 2) aufeinander hält.

5. Schneidorgan nach einem der vorhergehenden Ansprüche, dadurch gekennzeichnet, dass eines der beiden Blätter (1) einen Vorsprung (4) aufweist, der formschlüssig mit einem Schlitz (5) im anderen Blatt (2) im Eingriff ist und in diesem abwärts und aufwärts bewegbar ist.

6. Schneidorgan nach einem der vorhergehenden Ansprüche, wobei die Unterseite der Zacken (3) des erstgenannten Blattes (4) schräg abwärts zu einer der Hauptflächen dieses Blattes (4) verläuft, dadurch gekennzeichnet, dass die Unterseite der Zacken (3) des anderen Blattes (2) gleichfalls schräg abwärts zu einer der Hauptflächen dieses anderen Blattes (2) verläuft· und die genannten Hauptflächen der beiden Blätter (1, 2) sich aufeinander abstützen.

7. Schneidorgan nach einem der vorhergehenden Ansprüche, dadurch gekennzeichnet, dass die Blätter (1, 2) sich über eine derartige Breite erstrecken, dass sie eine der Seiten eines Silageblockes ohne seitliche Bewegung ausschneiden können.

8. Schneidorgan nach einem der Ansprüche 1-6, dadurch gekennzeichnet, dass die Blätter (1, 2) L-förmig sind und derart bemessen sind, dass sie zwei Seiten eines Silageblockes ausschneiden können.

9. Schneidorgan nach einem der Ansprüche 1-6, dadurch gekennzeichnet, dass die beiden Blätter (1, 2) U-förmig sind und derart bemessen sind, dass sie drei Seiten eines Silageblockes ausschneiden können.

10. Schneidorgan nach einem der vorhergehenden Ansprüche, dadurch gekennzeichnet, dass das Antriebsorgan (14-19) eine Anzahl von hydraulisch betätigbaren Zylinder-Stange-Einheiten (14, 17 ; 15, 18 ; 16, 19) aufweist, von deren wenigstens eine Einheit an das eine Blatt (1), und wenigstens eine Einheit an das andere Blatt (2) angreift.

11. Schneidorgan nach Anspruch 10, dadurch gekennzeichnet, dass wenigstens ein Zylinder (15, 16) oder seine Stange (18, 19) aufwärts und abwärts bewegbar ist und mit dem anderen Blatt (2) verbunden ist, während wenigstens ein Zylinder (14) oder seine Stange (17) an einem, in Höhenrichtung nicht verstellbaren Rahmenteil (20) befestigt ist und diese Stange (17) eine grössere Hublänge als die Stange (18, 19) des ersterwähnten Zylinders (15, 16) aufweist.

12. Schneidorgan nach Anspruch 11, dadurch gekennzeichnet, dass drei Zylinder (14, 15, 16) angewandt sind, deren äusseren Zylinder (15, 16) aufwärts und abwärts bewegbar sind und mit dem anderen Blatt (2) verbunden sind, während der mittlere Zylinder (14) an dem, in Höhenrichtung nicht verstellbaren Rahmenteil (20) befestigt ist und seine Stange (17) eine grössere Hublänge als die Stangen (18, 19) der äusseren Zylinder (15, 16) aufweist.

13. Schneidorgan nach Anspruch 12, dadurch gekennzeichnet, dass eine Leithülse, welche über den mittleren Zylinder (14) aufwärts und abwärts schiebbar geführt ist, ein Joch (21) trägt, auf welchem die äusseren Zylinder (15, 16) befestigt sind, während um die äusseren Kolben- oder Plungerstangen (18, 19) Leitbüchsen (22) verlaufen, die an ihrem oberen Ende mit dem Joch (21) verbunden sind und mit ihrem unteren Ende an das andere Blatt (2) angreifen.

14. Schneidorgan nach Anspruch 13, dadurch gekennzeichnet, dass die beiden Leitbüchsen (22) durch Führungen an dem nicht in Höhenrichtung verstellbaren Rahmenteil (20) geführt sind.

15. Schneidorgan nach Anspruch 3 und einem der Ansprüche 12-14, dadurch gekennzeichnet, dass das Antriebsorgan ein Hydrauliksystem enthält, das mit einem Umkehrschieber (23) mit einer Neutrallage ausgebildet ist, welcher an eine Druckmediumzufuhr (24) und eine Druckmediumabfuhr (25) angeschlossen ist, wobei in einer der beiden Lagen eines, hinter diesem Umkehrschieber (23) geschalteten, Dreiwegventiles (28) die Kolbenstange (17) des mittleren Zylinders (14), sowie die beiden äusseren Zylinder (15, 16), abhängig von der Arbeitslage des Umkehrschiebers (23), ununterbrochen aufwärts bzw. ununterbrochen abwärts bewegbar sind.

16. Schneidorgan nach Anspruch 15, dadurch gekennzeichnet, dass in der anderen Lage des Dreiwegventiles (28) und in einer der Arbeitslagen des genannten Umkehrschiebers (23) das Druckmedium einen hinter dem Dreiwegventil (28) geschalteten, automatisch durch das Druckmedium umschaltbaren, zweiten Umkehrschieber (30) erreicht, wobei in der einen Lage dieses zweiten Umkehrschiebers (30) die Stangen (18, 19) der beiden äusseren Zylinder (15, 16) über etwa ihre ganze Hublänge abwärts bewegt werden und dabei das eine Blatt (1) mitnehmen, während das andere Blatt (2) in Ruhe bleibt, und in der anderen Lage des zweiten Umkehrschiebers (30) die Kolbenstange (17) des mittleren Zylinders (14) abwärts bewegt wird über einen Abstand, welcher ungefähr der genannten Hublänge der Stangen (18, 19) der äusseren Zylinder (15, 16) entspricht und dabei das andere Blatt (2) mitnimmt, während das eine Blatt (1) in Ruhe bleibt, wobei über die Leitbüchsen (22) die äusseren Zylinder (15, 16) gleichfalls über die genannte Hublänge abwärts bewegt werden, während ihre Stangen (18, 19) in Ruhe bleiben und zu ihre obere Endlage in diesen äusseren Zylindern (15, 16) zurückkehren.

17. Schneidorgan nach Anspruch 16, dadurch gekennzeichnet, dass der eine äussere Zylinder (15) eine Kolbenstange (18) und der andere äussere Zylinder (16) eine Plungerstange (19) aufweist.

18. Schneidorgan nach einem der Ansprüche 1-9, dadurch gekennzeichnet, dass das Antriebsorgan (55, 56) die beiden Blätter (1, 2) abwechselnd schrittweise eine Schwenkbewegung durch das Silagegut gibt.

19. Schneidorgan nach Anspruch 18, dadurch gekennzeichnet, dass U-förmige Blätter (1, 2) angewandt sind, wobei der mittlere Teil dieser Blätter mit dem Radius der Schwenkbewegung gekrümmt ist.

20. Schneidorgan nach einem der Ansprüche 1-9, dadurch gekennzeichnet, dass das Antriebsorgan eine Anzahl von hydraulisch betätigbaren Zylinder-Stange-Einheiten (55, 56 ; 59, 60 ; 61, 62) enthält, von der ein Teil nur an eines der Blätter (1, 2) und die weiteren Einheiten an die beiden Blätter (1, 2) angreifen.

21. Schneidorgan nach einem der vorhergehenden Ansprüche, dadurch gekennzeichnet, dass dieses Schneidorgan Teil ausmacht eines an einem Schlepper befestigbaren Silagegutschneiders.

22. Schneidorgan nach einem der Ansprüche 1-20, dadurch gekennzeichnet, dass dieses Schneidorgan Teil ausmacht eines Silagegutschneid- und Abgabewagens.

## Claims

1. A cutting unit (10) for cutting silage, with a blade (1) which is downwardly and upwardly displaceable by means of a drive unit (14-19), the lower end of which blade is toothed, characterised in that a second blade (2) is provided which also has a toothed lower edge, both blades (1, 2) being arranged one behind the other and the teeth (3) of the said blades (1, 2) being displaced relative to one another, both blades are downwardly and upwardly displaceable relative to one another and both blades (1, 2) are reciprocatingly stepwise displaceable by means of the drive unit (14-19) gradually downwards through the silage.

2. A cutting unit according to claim 1, characterised in that the blades (1, 2) are upwardly displaceable together in a continuous manner by means of the drive unit (14-19).

3. A cutting unit according to either claim 1 or 2, characterised in that the blades (1, 2) are displaceable downwards to the silage together in a continuous manner by means of the drive unit (14-19).

4. A cutting unit according to any one of the preceding claims, characterised in that a guide unit (6) holds both blades (1, 2) on one another.

5. A cutting unit according to any one of the preceding claims, characterised in that one of the two blades (1) has a projection (4) which is engaged in a locking manner with a slot (5) in the other blade (2) and is downwardly and upwardly displaceable therein.

6. A. cutting unit according to any one of the preceding claims, the lower side of the teeth (3) of the first blade (1) are inclined downwardly relative to one of the main surfaces of this blade (1), characterised in that the lower side of the teeth (3) of the other blade (2) are also inclined downwardly relative to one of the main surfaces of the other blade (2) and the said main surfaces of both blades (1, 2) are supported on one another.

7. A cutting unit according to any one of the preceding claims, characterised in that the blades (1, 2) extend over a width such that they can cut out one of the sides of a silage block without lateral displacement.

8. A cutting unit according to any one of claims 1-6, characterised in that the blades (1, 2) are L-shaped and are dimensioned so that they can cut out two sides of a silage block.

9. A cutting unit according to any one of claims 1-6, characterised in that both blades (1, 2) are U-shaped and are dimensioned so that they can cut out three sides of a silage block.

10. A cutting unit according to any one of the preceding claims, characterised in that the drive unit (14-19) has a plurality of hydraulically actuated cylinder/rod units (14, 17 ; 15, 18 ; 16, 19), at least one unit of which engages on one blade (1) and one on the other blade (2).

11. A cutting unit according to claim 10, characterised in that at least one cylinder (15, 16) or its rod (18, 19) is downwardly and upwardly displaceable and is connected to the other blade (2), while at least one cylinder (14) or its rod (17) is secured to a non-vertically adjustable frame part (2) and this rod (17) has greater length of stroke than the rod (18, 19) of the first-mentioned cylinder (15, 16).

12. A cutting unit according to claim 11, characterised in that there are three cylinders (14, 15, 16), the outer cylinders (15, 16) of which are downwardly and upwardly displaceable and are connected to the other blade (2), while the middle cylinder (14) is secured to the non-vertically-adjustable frame part (20), and its rod (17) has a greater length of stroke than the rods (18, 19) of the outer cylinders (15, 16).

13. A cutting unit according to claim 12, characterised in that a guide casing, which is guided over the middle cylinder (14) in an upwardly and downwardly displaceable manner, supports a yoke (21), on which the outer cylinders (15, 16) are secured, while guide sleeves (22) extend about the outer piston or plunger rods (18, 19), and are connected at their upper end to the yoke (21) and engage on the other blade (2) via their lower end.

14. A cutting unit according to claim 13, characterised in that both guide sleeves (22) are guided through guides on the non-vertically-adjustable frame part (20).

15. A cutting unit according to claim 3 and any one of claims 12-14, characterised in that the drive unit contains a hydraulic system which is designed with a reversing slide valve (23) with a neutral position, which is connected to a pressure medium inlet (24) and a pressure medium outlet (25), the piston rod (17) of the middle cylinder (14) and both outer cylinders (15, 16) being displaceable continuously upwards or continuously downwards in one of the two positions of a three-way valve (28) disposed downstream of the reversing slide valve (23), independently of the operating position thereof.

16. A cutting unit according to claim 15, characterised in that in the other position of the three-way valve (28) and in one of the operating positions of the said reversing slide valve (23) the pressure medium reaches a second reversing slide valve (30) which is disposed downstream of the three-way valve (28) and is automatically reversible via the pressure medium, the rods (18, 19) of the two outer cylinders (15, 16) being displaced downwards over their entire length of stroke and thus taking along one blade (1) in one position of the said second reversing slide valve (30), while the other blade (2) stays still, and in the other position of the reversing slide valve (30) the piston rod (17) of the middle cylinder (14) is displaced downwards over a distance, which corresponds approximately to the said length of stroke of the rods (18, 19) of the outer cylinders (15, 16) and takes the other blade (2) along with it, while one blade (1) stays still, the outer cylinders (15, 16) also being displaced downwards via the guide sleeves over the said length of stroke, while their rods (18, 19) stay still and return to their upper end position in the said outer cylinders (15, 16).

17. A cutting unit according to claim 16, characterised in that one outer cylinder (15) has a piston rod (18) and the other outer cylinder (16) a plunger rod (19).

18. A cutting unit, according to any one of claims 1-9, characterised in that the drive unit (55, 56) provides both blades (1, 2) alternately and gradually with a pivoting movement through the silage.

19. A cutting unit, according to claim 18, characterised in that the U-shaped blades (1, 2) are used, the middle part of these blades being curved with the radius of the pivot movement.

20. A cutting unit, according to any one of claims 1-9, characterised in that the drive unit comprises a plurality of hydraulically actuated cylinder rod units (55, 56 ; 59, 60 ; 61, 62), of which a part engages on only one of the blades (1, 2) and the further units engage on both blades (1, 2).

21. A cutting unit, according to any one of the preceding claims, characterised in that the said cutting unit forms part of a silage cutter which can be secured to a tractor.

22. A cutting unit according to any one of claims 1-20, characterised in that the said cutting unit forms part of a silage cutting and release device.

**Revendications**

1. Organe de coupe (10) pour hacher du fourrage ensilé, présentant une lame (1) dont le bord inférieur est réalisé en zigzag, et à laquelle un organe d'entraînement (14-19) peut imprimer des mouvements vers le bas et vers le haut, caractérisé par le fait qu'il est prévu une seconde lame (2) présentant également un bord inférieur en zigzag, les deux lames (1, 2) étant disposées l'une derrière l'autre et les dents (3) de ces lames (1, 2) étant décalées les unes des autres, les deux lames pouvant effectuer des mouvements vers le bas et vers le haut l'une par rapport à l'autre, et les deux lames (1, 2) pouvant être mues alternativement et en pas à pas vers le bas, à travers le fourrage ensilé, par l'intermédiaire de l'organe d'entraînement (14-19).

2. Organe de coupe selon la revendication 1, caractérisé par le fait que les lames (1, 2) peuvent être mues conjointement vers le haut par l'organe d'entraînement (14-19), d'une manière ininterrompue.

3. Organe de coupe selon la revendication 1 ou 2, caractérisé par le fait que les lames (1, 2) peuvent être conjointement mues vers le bas d'une manière ininterrompue, par l'organe d'entraînement (14-19), jusqu'au fourrage ensilé.

4. Organe de coupe selon l'une des revendications précédentes, caractérisé par le fait qu'un organe directeur (6) maintient les deux lames (1, 2) l'une sur l'autre.

5. Organe de coupe selon l'une des revendications précédentes, caractérisé par le fait que l'une (1) des deux lames comporte une saillie (4) qui est en prise par concordance de formes avec une fente (5) pratiquée dans l'autre lame (2), et peut être mue vers le bas et vers le haut dans cette dernière.

6. Organe de coupe selon l'une des revendications précédentes, dans lequel la face inférieure des dents (3) de la lame (1) citée en premier lieu s'étend à l'oblique vers le bas, vers l'une des faces principales de cette lame (1), caractérisé par le fait que la face inférieure des dents (3) de l'autre lame (2) s'étend, similairement, à l'oblique vers le bas, vers l'une des faces principales de cette autre lame (2), les faces principales susmentionnées des deux lames (1, 2) prenant appui les unes sur les autres.

7. Organe de coupe selon l'une des revendications précédentes, caractérisé par le fait que les lames (1, 2) s'étendent sur une largeur telle qu'elles puissent, sans aucun mouvement latéral, sectionner l'un des côtés d'un ballot de fourrage ensilé.

8. Organe de coupe selon l'une des revendications 1-6, caractérisé par le fait que les lames (1, 2) sont configurées en L, et sont dimensionnées de façon qu'elles puissent sectionner deux côtés d'un ballot de fourrage ensilé.

9. Organe de coupe selon l'une des revendications 1-6, caractérisé par le fait que les deux lames (1, 2) sont configurées en U, et sont dimensionnées de manière qu'elles puissent sectionner trois côtés d'un ballot de fourrage ensilé.

10. Organe de coupe selon l'une des revendications précédentes, caractérisé par le fait que l'organe d'entraînement (14-19) présente un certain nombre de vérins actionnables hydrauliquement (14, 17 ; 15, 18 ; 16, 19), dont au moins l'un est en prise avec l'une (1) des lames et au moins l'un est en prise avec l'autre lame (2).

11. Organe de coupe selon la revendication 10, caractérisé par le fait qu'au moins un cylindre (15, 16) ou sa tige (18, 19) peut être mû vers le haut et vers le bas et est relié à l'autre lame (2), tandis qu'au moins un cylindre (14) ou sa tige (17) est relié à une partie (20) du châssis non réglable en hauteur, cette tige (17) ayant une plus grande longueur de course que la tige (18, 19) du cylindre (15, 16) cité en premier lieu.

12. Organe de coupe selon la revendication 11, caractérisé par le fait qu'on utilise trois cylindres (14, 15, 16), parmi lesquels les cylindres externes (15, 16) peuvent être mus vers le haut et vers le bas et sont reliés à l'autre lame (2), tandis que le cylindre central (14) est fixé à la partie (20) du châssis non réglable en hauteur, et que sa tige (17) a une plus grande longueur de course que les tiges (18, 19) des cylindres externes (15, 16).

13. Organe de coupe selon la revendication 12, caractérisé par le fait qu'une douille de guidage, mobile à coulissements ascendants et descendants sur le cylindre central (14), porte un étrier (21) sur lequel les cylindres externes (15, 16) sont fixés, cependant que des douilles de guidage (22), s'étendant autour des tiges (18, 19) des pistons ou plongeurs externes, sont reliées par leur extrémité supérieure à l'étrier (21) et sont en prise avec l'autre lame (2) par leur extrémité inférieure.

14. Organe de coupe selon la revendication 13, caractérisé par le fait que les deux douilles de guidage (22) sont mobiles grâce à des guides sur la partie (20) du châssis non réglable en hauteur.

15. Organe de coupe selon la revendication 3 et l'une des revendications 12-14, caractérisé par le fait que l'organe d'entraînement renferme un système hydraulique réalisé muni d'un distributeur d'inversion (23) pouvant occuper une position neutre, et raccordé à une admission (24) de fluide sous pression ainsi qu'à une évacuation (25) de fluide sous pression ; et par le fait que, dans l'une des deux positions d'une valve trois voies (28) installée derrière le distributeur d'inversion (23), la tige (17) du piston du cylindre central (14), ainsi que les deux cylindres externes (15, 16), peuvent être respectivement mus d'une manière ininterrompue vers le haut ou vers le bas, en fonction de la position de travail du distributeur d'inversion (23).

16. Organe de coupe selon la revendication 15, caractérisé par le fait que, dans l'autre position de la valve trois voies (28) et dans l'une des positions de travail du distributeur d'inversion précité (23), le fluide sous pression parvient à un second distributeur d'inversion (30) installé derrière la valve trois voies (28) et pouvant être commuté automatiquement par le fluide sous pression ; par le fait que, dans l'une des positions de ce second distributeur d'inversion (30), les tiges (18, 19) des deux cylindres externes (15, 16) sont mues vers le bas sur approximativement toute leur longueur de course et entraînent alors l'une (1) des lames, tandis que l'autre lame (2) demeure au repos ; et par le fait que, dans l'autre position du second distributeur d'inversion (30), la tige (17) du piston du cylindre central (14) est mue vers le bas d'une distance correspondant environ à la longueur de course précitée des tiges (18, 19) des cylindres externes (15, 16), et entraîne alors l'autre lame (2) tandis que la première lame (1) demeure au repos, les douilles de guidage (22) provoquant également le mouvement descendant des cylindres externes (15, 16) de la longueur de course précitée, cependant que leurs tiges (18, 19) demeurent au repos et retournent à leur position extrême supérieure dans ces cylindres externes (15, 16).

17. Organe de coupe selon la revendication 16, caractérisé par le fait que l'un (15) des cylindres externes présente une tige (18) de piston et l'autre cylindre externe (16) comporte une tige (19) de plongeur.

18. Organe de coupe selon l'une des revendications 1-9, caractérisé par le fait que l'organe d'entraînement (55, 56) imprime alternativement aux deux lames (1, 2) un mouvement pivotant du type pas à pas à travers le fourrage ensilé.

19. Organe de coupe selon la revendication 18, caractérisé par le fait qu'on utilise des lames (1, 2) configurées en U, la région médiane de ces lames étant arquée selon le rayon du mouvement pivotant.

20. Organe de coupe selon l'une des revendications 1-9, caractérisé par le fait que l'organe d'entraînement renferme un certain nombre de vérins actionnables hydrauliquement (55, 56 ; 59, 60 ; 61, 62) dont une partie est seulement en prise avec l'une des lames (1, 2), les autres vérins étant en prise avec les deux lames (1, 2).

21. Organe de coupe selon l'une des revendications précédentes, caractérisé par le fait que cet organe de coupe fait partie d'un hacheur à fourrage ensilé pouvant être fixé à un tracteur.

22. Organe de coupe selon l'une des revendications 1-20, caractérisé par le fait que cet organe de coupe fait partie d'un chariot de hachage et de délivrance de fourrage ensilé.

fig.2

fig.1

fig.3

fig.4

1

fig.5

fig.6

fig.7

fig.8

fig.9

fig.10

fig.11